# EUROPEAN PATENT SPECIFICATION

(11) **EP 4 757 135 B1**
(45) Date of publication and mention of the grant of the patent: **18.11.2026**
(21) Application number: 25199350.7
(22) Date of filing: 01.09.2025
(51) Int. Cl.: H02K 5/132, B63H 20/00, H02K 3/52, H02K 5/22

(54) **ELECTRIC BOAT PROPULSION DEVICE AND BOAT**
ELEKTRISCHE SCHIFFSANTRIEBSVORRICHTUNG UND BOOT
DISPOSITIF DE PROPULSION DE BATEAU ÉLECTRIQUE ET BATEAU

(30) Priority: 06.12.2024 JP 2024212977
(43) Date of publication of application: 10.06.2026
(73) Proprietor: Yamaha Hatsudoki Kabushiki Kaisha, Iwata-shi, Shizuoka 438-8501 (JP)
(72) Inventor: Miyakozawa, Yuki, Iwata-shi, Shizuoka, 4388501 (JP); Takeda, Kentaro, Iwata-shi, Shizuoka, 4388501 (JP); Shiraishi, Tomonari, Iwata-shi, Shizuoka, 4388501 (JP); Matsumura, Kazuki, Iwata-shi, Shizuoka, 4388501 (JP)
(74) Representative: Grünecker Patent- und Rechtsanwälte PartG mbB

(56) References cited:
- EP-A2- 2 352 220
- EP-B1- 1 579 550
- CN-A- 117 081 284
- CN-U- 211 930 351
- DE-A1- 102019 212 391
- JP-A- 2016 077 141
- JP-U- H0 210 756
- US-A1- 2016 020 658

## Description

The present invention relates to an electric boat propulsion device and a boat.

Windings disposed in a stator of an electric motor of an electric boat propulsion device are electrically connected to a terminal block by a busbar provided in a connecting member. The terminal block is located in the center of the connecting member (see e.g.. JP 2006-187175 A, JP 2009-290921 A, JP H9-261903 A, JP 2009-225572 A, JP 7489312 B). Prior art document US 2016/0020658 A1 discloses a rotating electric machine with a rotor having a rotation shaft, wherein the rotor is configured in radial direction of the rotation shaft. Said machine comprises a stator core, with windings wound around the stator core, and a motor control circuit. A connecting member with a conductor is electrically connecting the windings and the motor control circuit. The connecting member is arc-shaped along a circumferential direction of the rotation shaft. An angle between a first imaginary line connecting the rotation shaft and a first end of the connecting member and a second imaginary line connecting the rotation shaft and a second end of the connecting member and subtended by the connecting member itself is 240 degrees or less.

It is the object of the present invention to provide an electric boat propulsion device and a boat with an electric boat propulsion device that need low amount of material and can facilitate the processing of the connecting member.

According to the present invention said object is solved by an electric boat propulsion device having the features of independent claim 1. Preferred embodiments are laid down in the dependent claims.

Accordingly, the technology disclosed herein can be implemented as the following aspects.
(1) An electric boat propulsion device disclosed herein includes: a rotor having a rotation shaft; a stator core; windings wound around the stator core; a motor control circuit; and a connecting member having a conductor electrically connecting the windings and the motor control circuit, the connecting member being arc-shaped along the circumferential direction of the rotation shaft. The angle between a first imaginary line connecting the rotation shaft and one end of the connecting member and a second imaginary line connecting the rotation shaft and the other end of the connecting member is 240 degrees or less.
(2) In the above electric boat propulsion device, the connecting member may include a terminal block, and the terminal block may be located on one directional side relative to the circumferential center of the connecting member. According to this configuration, the terminal block of the connecting member is located on one directional side in the circumferential direction of the connecting member, which facilitates processing of the connecting member.
(3) In the above electric boat propulsion device, the stator core may be provided with 12 or more slots formed therein. According to this configuration, even if the number of slots is large, the manufacturing process can be simplified by such a connecting member.
(4) In the above electric boat propulsion device, the number of series connections of the windings relative to the number of slots may be 1/12 or more. According to this configuration, the slot terminals can be easily grouped together by such a connecting member.
(5) In the above electric boat propulsion device, the ratio of the number of series connections of the windings to the number of parallel connections of the windings may be greater than 1. According to this configuration, with the above connecting member, the windings provided in the stator core have more series connections than parallel connections, thus increasing the torque of the motor.
(6) In the above electric boat propulsion device, the conductor may be a busbar. According to this configuration, especially when the conductor is a busbar, such a connecting member further reduces the amount of material and facilitates the processing of the connecting member.
(7) In the above electric boat propulsion device according to the invention, the connecting member has a first projection inserted between adjacent first and second teeth disposed on the stator core. According to this configuration, the connecting member is stabilized against the stator core by having the first projection.
(8) In the above electric boat propulsion device according to the invention, the first projection of the connecting member is positioned between the first and second teeth in the circumferential direction. According to this configuration, the connecting member is more stable with respect to the stator core in the circumferential direction of the rotation shaft by having the first projection disposed between two adjacent teeth in the circumferential direction of the rotation shaft.
(9) In the above electric boat propulsion according to the invention, the first projection of the connecting member is located between at least one of the first tooth and the second tooth and an inner surface of the stator core between the base of the first tooth and the base of the second tooth in the radial direction of the rotation shaft. According to this configuration, the connecting member is more stable with respect to the stator core in the radial direction of the rotation shaft by having the first projection located between at least one of the two adjacent teeth and the inner surface between the base ends of the two adjacent teeth. In the above electric boat propulsion device according to the invention, the first projection has: a first inner portion contacting the first tooth, a second inner portion contacting the second tooth, a connecting portion located between the first inner portion and the second inner portion in the circumferential direction and connecting the first inner portion and the second inner portion, the connecting portion having a U-shape protruding toward the inner surface side when viewed in the axial direction, and an outer portion connected to the U-shaped portion of the connecting portion and contacting the inner surface.
(10) In the above electric boat propulsion device, the first projection may have a groove in the axial direction of the rotation shaft. According to this configuration, the connecting member and the stator core can be more stabilized in the circumferential direction by the first projection of the connecting member having the groove in the axial direction of the rotation shaft.
(11) In the above electric boat propulsion device, the stator core may have a second projection in the radial direction of the rotation shaft, and the second projection may contact one side of the connecting member in the radial direction. According to this configuration, the second projection stabilizes the connecting member with respect to the radial direction.
(12) In the above electric boat propulsion device, a stator including the stator core, the windings, and the connecting member may be embedded in a resin. According to this configuration, when the stator core portion is embedded in resin, deformation of the connecting member is less likely to occur by the structure of the connecting member.
(13) A boat disclosed herein may have the above electric boat propulsion device.

An electric boat propulsion device disclosed herein includes: a rotor having a rotation shaft; a stator core; windings wound around the stator core; a motor control circuit; and a connecting member having a conductor electrically connecting the windings and the motor control circuit, the connecting member being arc-shaped along the circumferential direction of the rotation shaft. A terminal block is included in the connecting member, the terminal block is located on one directional side relative to the circumferential center of the connecting member, and the angle between a first imaginary line connecting the rotation shaft and one end of the connecting member and a second imaginary line connecting the rotation shaft and the other end of the connecting member is 240 degrees or less. According to this electric boat propulsion device, the connecting member has a length shorter than the circumference of the stator core, and the terminal block is located at one end of the connecting member, which reduces the amount of material and facilitates the processing of the connecting member. In the above electric boat propulsion device, the connecting member has at least one first projection and the stator core has at least one first tooth and second tooth adjacent to each other, wherein the first projection is inserted between the first tooth and the second tooth disposed on the stator core, the first projection of the connecting member is positioned between the first tooth and second tooth in the circumferential direction, and the first projection of the connecting member is located between the first tooth and the second tooth and an inner surface of the stator core between a base end of the first tooth and a base end of the second tooth in the radial direction of the rotation shaft, wherein the first projection has: a first inner portion contacting the first tooth, a second inner portion contacting the second tooth, a connecting portion located between the first inner portion and the second inner portion in the circumferential direction and connecting the first inner portion and the second inner portion, the connecting portion having a U-shape protruding toward the inner surface side when viewed in the axial direction, and an outer portion connected to the U-shaped portion of the connecting portion and contacting the inner surface.

The technology disclosed herein can be implemented in various forms, e.g., in the form of an outboard motor, a boat propulsion device, and a boat equipped with a boat propulsion device.

According to the boat propulsion device disclosed herein, the connecting member has a length shorter than the circumference of the stator core, thereby reducing the amount of material and facilitating the processing of the connecting member.

### BRIEF DESCRIPTION OF THE DRAWINGS

FIG. 1 is a perspective view schematically illustrating a configuration of an embodiment of a boat.
FIG. 2 is a side view schematically illustrating a configuration of an electric propulsion device.
FIG. 3 is a schematic view illustrating a configuration of a drive unit.
FIG. 4 is a perspective view schematically illustrating a configuration of a stator.
FIG. 5 is a perspective view schematically illustrating a configuration of a stator body.
FIG. 6 is a perspective view illustrating a configuration of a stator core and windings.
FIG. 7 is an enlarged view of VII in FIG. 6.
FIG. 8 is a perspective view illustrating a configuration of a connecting member.
FIG. 9 is an enlarged view of IX in FIG. 8.
FIG. 10 is an enlarged view of X in FIG. 5.
FIG. 11 is a cross-sectional view at position XI-XI in FIG. 10.
FIG. 12 is a cross-sectional view at position XII-XII of FIG. 10.

### DETAILED DESCRIPTION OF THE PREFERRED EMBODIMENTS

### A. EMBODIMENT:

### A-1. CONFIGURATION OF BOAT 1:

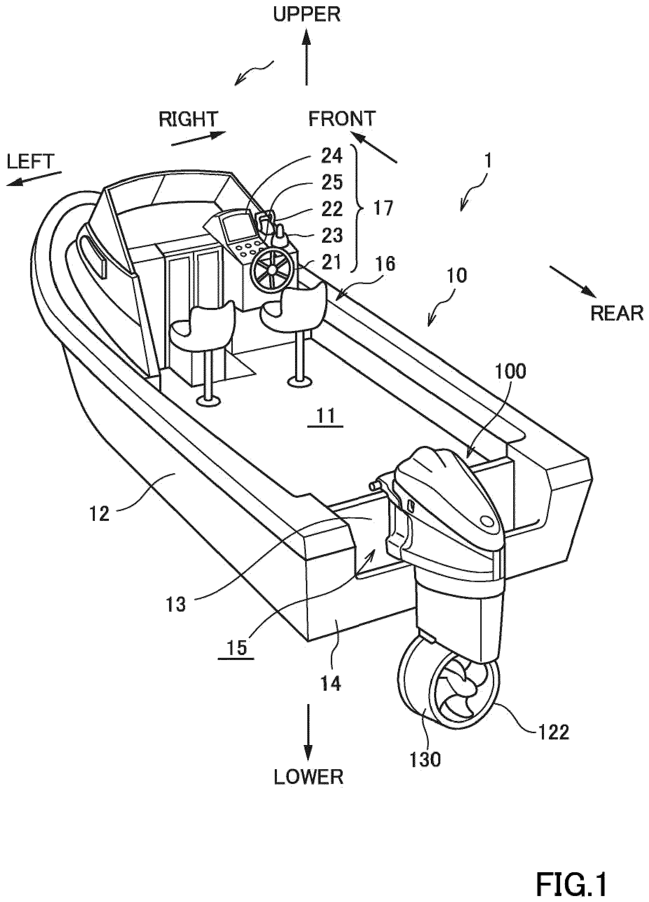

FIG. 1 is a perspective view schematically illustrating a configuration of an embodiment of a boat 1. FIG. 1 and other some drawings described below show arrows representing each direction with respect to the position of the boat 1. More specifically, some figures show arrows representing front (FRONT), rear (REAR), left (LEFT), right (RIGHT), upper (UPPER), and lower (LOWER) directions, respectively. The front-rear direction, left-right direction, and upper-lower direction (vertical direction) are orthogonal to each other. The boat 1 is equipped with a boat body 10 and an electric propulsion device 100. The electric propulsion device 100 is an example of the electric boat propulsion device.

The boat body 10 is a part of the boat 1 for the user (crew) to ride. The boat body 10 includes a boat main body 12, a pilot seat 16, and a steering device 17.

The boat main body 12 includes a living space 11. The pilot seat 16 is installed in the living space 11. The boat body 10 further includes a partition wall 13 and a transom 14. The partition wall 13 divides the rear side of the living space 11. The transom 14 is located at the rear end of the boat body 10. In the front-rear direction, a space 15 exists between the transom 14 and the partition wall 13.

The steering device 17 is located near the pilot seat 16. The steering device 17 is a device for steering the boat. The steering device 17 includes a steering wheel 21, a shift/throttle lever 22, a joystick unit 23, a display device 24, and an input device 25.

The steering wheel 21 is an operation device for steering the boat 1. The shift/throttle lever 22 is an operation device for performing a shifting operation and a propulsion force change operation of the boat 1. The joystick unit 23 is an operation device for performing a steering operation of the boat 1 and a shifting operation and a propulsion force change operation of the boat 1. The display device 24 is, e.g., a liquid crystal display and displays various images (e.g., operation images) related to the boat 1. The input device 25 is, e.g., a button for changing the steering mode and the like.

### A-2. CONFIGURATION OF ELECTRIC PROPULSION DEVICE 100:

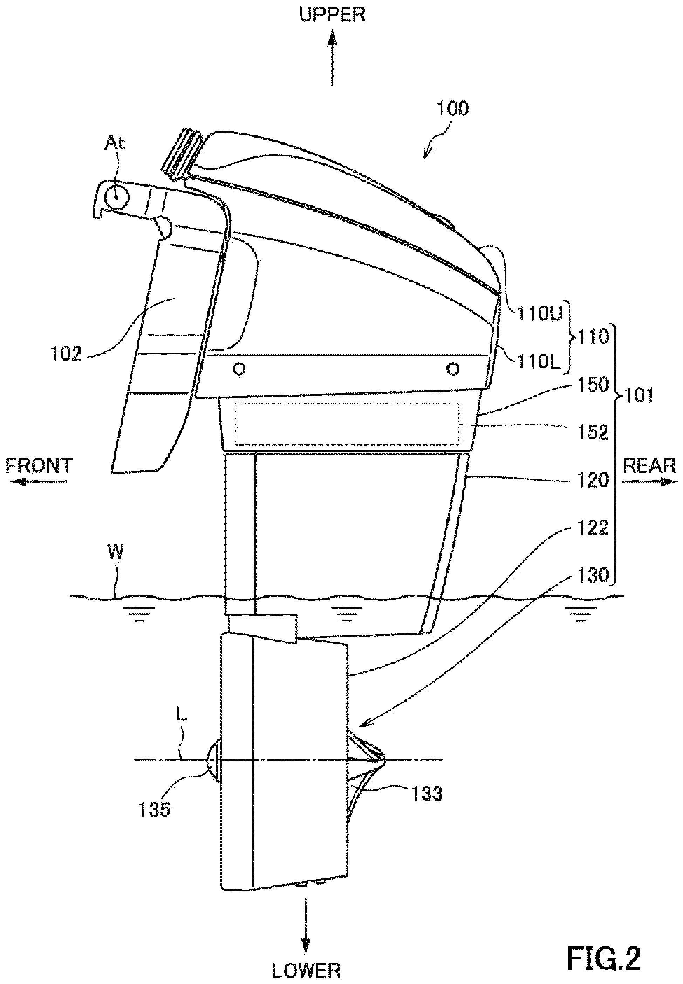

FIG. 2 is a side view schematically illustrating a configuration of an electric propulsion device 100. The electric propulsion device 100 is a device that generates thrust to propel the boat 1. The electric propulsion device 100 is an electric propulsion device driven by an electric motor. In the following, the electric propulsion device 100 in the reference attitude will be described unless otherwise specified. The reference attitude is the attitude of the electric propulsion device 100 when the boat 1 is running (the attitude shown in FIG. 1) and is the attitude in which the propeller rotation shaft L of the propeller 132 (described below) extends in the front-rear direction. The front-rear direction, the left-right direction, and the upper-lower direction are defined on the basis of the electric propulsion device 100 in the reference attitude.

The electric propulsion device 100 is attached to the transom 14 disposed at the rear (stern) of the boat body 10 (see FIG. 1). The electric propulsion device 100 has a propulsion device main body 101 and a suspension device 102.

The propulsion device main body 101 has a cowl 110, a middle housing 150, a steering device 152, a lower housing 120, a duct 122, and a drive unit 130.

The cowl 110 is located at an upper portion of the electric propulsion device 100. The cowl 110 is a cover that accommodates, e.g., various wirings and other components. The cowl 110 has an upper cover 110U, a left cover 110L, and a right cover (not shown). The left cover 110L is located on the port side. The right cover is located on the starboard side. The left cover 110L and the right cover are positioned to face each other in the horizontal (left-right) direction. The upper cover 110U is located above the left cover 110L and the right cover. The upper cover 110U covers the top of the left cover 110L and the top of the right cover, respectively.

The middle housing 150 is located below the cowl 110 in the electric propulsion device 100. The middle housing 150 is a cover that accommodates, e.g., the steering device 152 and various wirings.

The steering device 152 is a device that controls the steering angle of the boat 1. The steering device 152 includes, e.g., an electric motor. The steering device 152 is accommodated in the middle housing 150.

The lower housing 120 is located below the middle housing 150 in the electric propulsion device 100. The lower housing 120 is a cover that accommodates, e.g., a motor control unit (MCU) and various wirings. The lower housing 120 is rotatably attached to the middle housing 150 around an axis along the upper-lower direction (steering axis). When the steering device 152 accommodated in the middle housing 150 is operated, the lower housing 120 and the drive unit 130 connected to the lower housing 120 rotate about the steering axis. This controls the steering angle of the boat 1.

The duct 122 is located below the lower housing 120 in the electric propulsion device 100. The duct 122 is tubular. The duct 122 is positioned lower than the water surface W in the reference attitude. The drive unit 130 is located radially inner side of the duct 122. In the radially inner side of the duct 122, a stator fin 133 and a bearing 135 are provided. The bearing 135 supports the propeller 132, described below, rotatably about the propeller rotation shaft L. The stator fin 133 has a plurality of fins (e.g., three fins). The plurality of fins are arranged radially around the bearing 135. The plurality of fins are equally spaced around the propeller rotation shaft L. The plurality of fins are fixed to the duct 122. The plurality of fins protrude rearwardly from the duct 122 behind the propeller 132 (see FIG. 1).

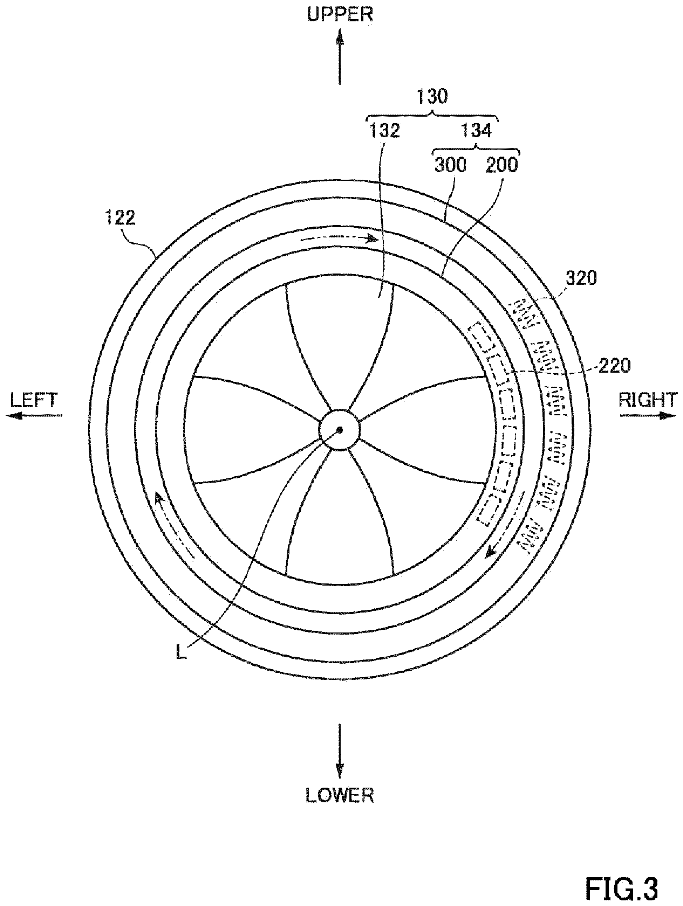

FIG. 3 is a schematic view illustrating a configuration of the drive unit 130. The drive unit 130 generates thrust to propel the boat 1. The drive unit 130 includes a propeller 132 and an electric motor 134.

The propeller 132 is a rotating member having a plurality of wings. The propeller 132 generates thrust by rotating. The propeller 132 is located radially inner side of the duct 122. The propeller 132 can rotate about the horizontal propeller rotation shaft L. The propeller rotation shaft L is parallel to the central axis of the duct 122. The duct 122 covers the entire circumference of the propeller 132. The duct effect of the duct 122 increases the velocity of water flowing into the duct 122.

The electric motor 134 rotates the propeller 132. The power source for the electric motor 134 is three-phase AC. The electric motor 134 includes a rotor 200 and a stator 300. Each of the rotor 200 and the stator 300 is tubular. The rotor 200 is located radially inner side of the stator 300. The rotor 200 and the stator 300 are arranged coaxially. The rotor 200 is rotatably supported with respect to the duct 122. The rotor 200 rotates about the propeller rotation shaft L with respect to the stator 300. The propeller 132 is located radially inner side of the rotor 200. The propeller 132 is fixed to the rotor 200. The propeller 132 rotates together with the rotor 200. The rotor 200 includes a plurality of permanent magnets 220. In FIG. 3, only one of the plurality of permanent magnets 220 is signed, and the signs of the other permanent magnets 220 are omitted. The plurality of permanent magnets 220 are arranged along the circumferential direction of the rotor 200.

The stator 300 is fixed to the duct 122. The stator 300 includes a plurality of windings 320. In FIG. 3, only one of the plurality of windings 320 is signed, and the sings of the other windings 320 are omitted. The plurality of windings 320 are arranged along the circumferential direction of the stator 300. When the plurality of windings 320 are energized, an electromagnetic force is generated to rotate the rotor 200. With this configuration, the propeller 132 generates forward propulsion force when the rotor 200 of the electric motor 134 rotates in the forward rotation direction and rearward propulsion force when the rotor 200 of the electric motor 134 rotates in the reverse rotation direction. The configuration of the stator 300 will be described in detail later.

The suspension device 102 is a device for suspending the propulsion device main body 101 to the boat body 10. The suspension device 102 rotates the propulsion device main body 101 about the tilt axis At (see FIG. 2). This achieves the tilting action of rotating the propulsion device main body 101 in the upper-lower direction with respect to the boat body 10.

### A-3. DETAILED CONFIGURATION OF STATOR 300:

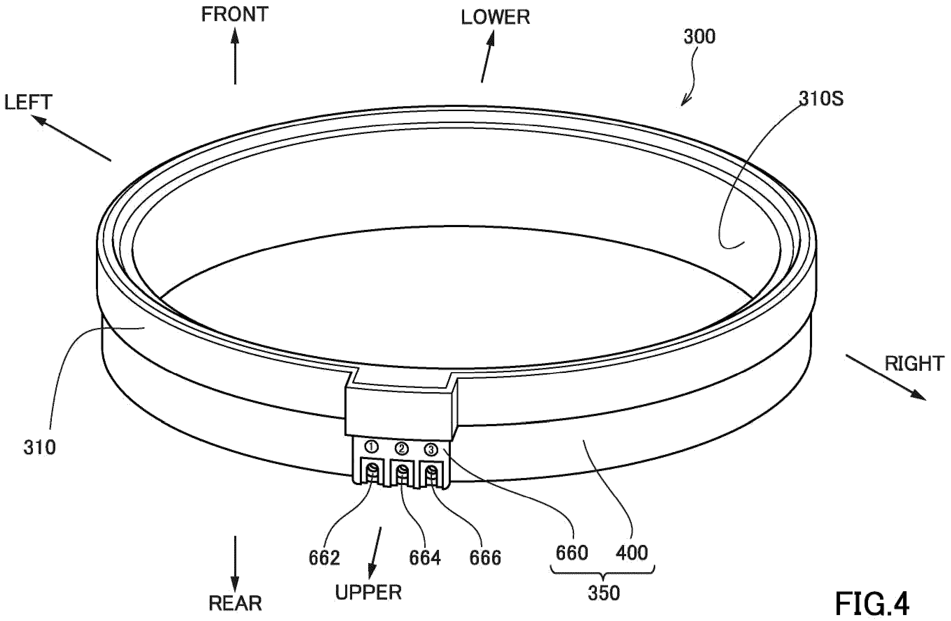

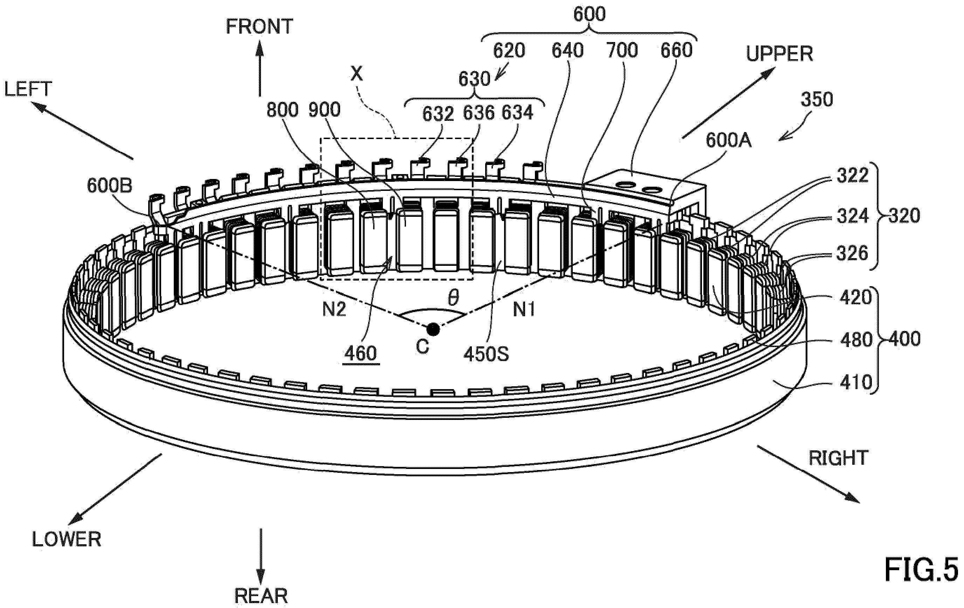

FIG. 4 is a perspective view schematically illustrating a configuration of a stator 300. FIG. 5 is a perspective view schematically illustrating a configuration of a stator body 350. As shown in FIG. 4, the stator 300 includes a resin portion 310 and the stator body 350.

The stator body 350 is the internal structure of the stator 300. As shown in FIG. 5, the stator body 350 has a stator core 400, windings 320, and a connecting member 600. The windings 320 are members that generate electromagnetic force, as described above. The windings 320 are conductive. The windings 320 are formed of copper wire. The copper wires of the windings 320 are covered with an insulator. The stator core 400 is tubular. The stator core 400 has a plurality of teeth 420 on the radially inner surface. The windings 320 are wound around each of the teeth 420. The connecting member 600 electrically connects the motor control circuit and the windings 320. The connecting member 600 has a terminal block 660. The terminal block 660 is a member electrically connecting the stator 300 and the motor control circuit. The terminal block 660 has three-phase AC connection terminals, i.e., a U-phase terminal 662, a V-phase terminal 664, and a W-phase terminal 666 (see FIG. 4). The stator core 400, the windings 320, and the connecting member 600 will be described in detail later.

As shown in FIG. 4, the resin portion 310 is arranged on the stator body 350. Specifically, the resin portion 310 is disposed on the entire of the front side of the stator body 350 and the radially inner side of the stator body 350, and on the front half of the radially outer side of the stator body 350. The resin of the resin portion 310 is a thermosetting bulk molding compound. The inner surface 310S of the resin portion 310 is further coated. When the stator 300 is placed in the duct 122, the inner surface 310S of the stator 300 and the front surface of the stator 300 are exposed to the water. The rest of the stator is accommodated inside the duct 122. The stator 300 is made by insert molding the stator body 350 with the resin forming the resin portion 310. In other words, the stator 300 is manufactured by mounting the stator body 350 in a mold in advance, closing the mold, and injecting and molding the resin.

A part of the stator body 350 is exposed from a portion of the stator 300 other than the resin portion 310. The exposed stator body 350 is part of the stator core 400 and the U-phase terminal 662, the V-phase terminal 664, and the W-phase terminal 666 of the terminal block 660.

### STATOR CORE 400

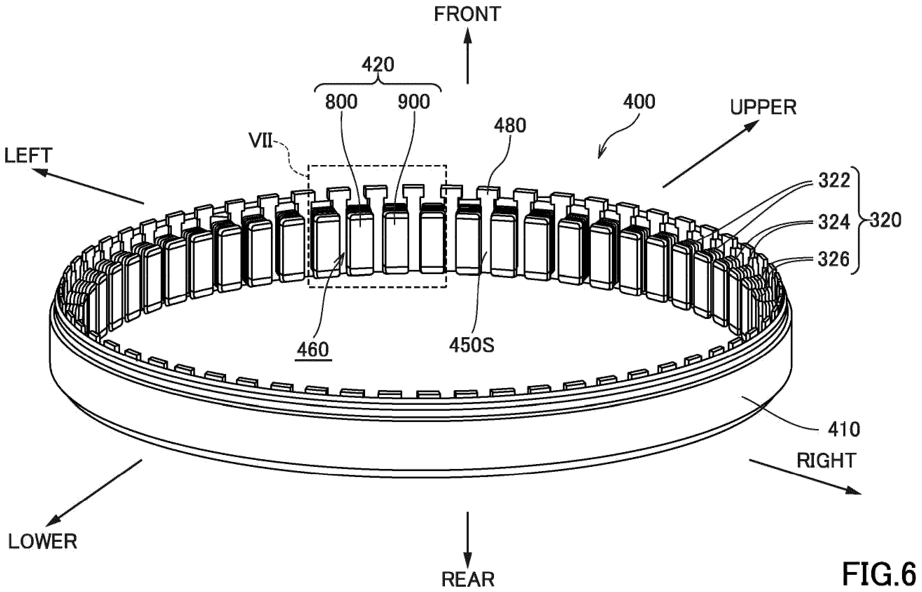

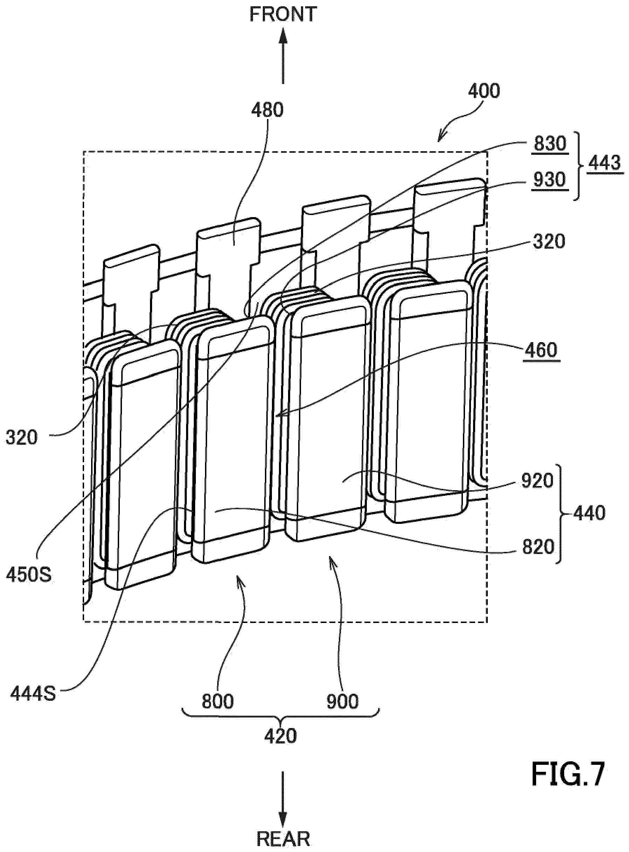

FIG. 6 is a perspective view illustrating a configuration of the stator core 400 and the windings 320. FIG. 7 is an enlarged view of the area indicated by VII of FIG. 6. The stator core 400 includes a stator core body 410, a plurality of the teeth 420, and a core projection 480. The core projection 480 is an example of the second projection.

The stator core body 410 is a member forming a body portion of the stator core 400. The stator core body 410 is tubular. The stator core body 410 is made of iron.

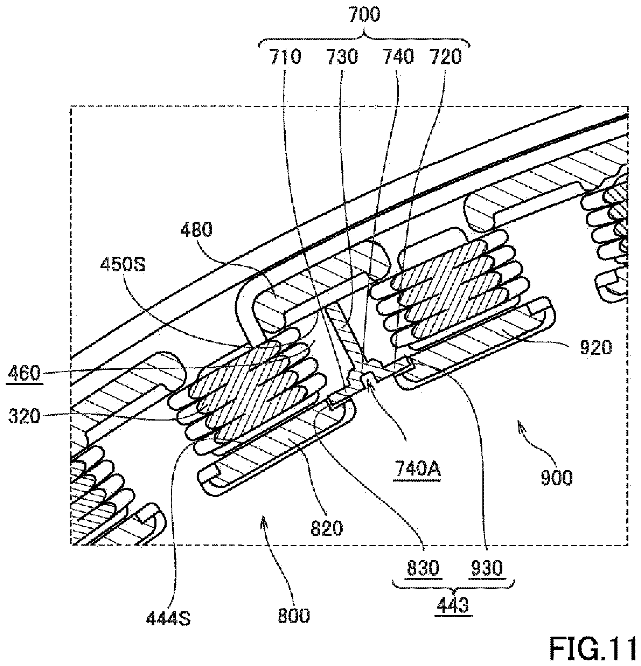

The teeth 420 are members around which the windings 320 are wound. The teeth 420 are disposed on the inner surface 450S, which is the radially inner surface of the stator core body 410 (see FIG. 11). The plurality of teeth 420 are disposed at predetermined intervals in the circumferential direction of the inner surface 450S. In this embodiment, the number of teeth is 60. The teeth 420 are made of iron. The teeth 420 have a tooth body (not shown) and a tooth tip 440. The tooth body extends from the inner surface 450S. The tooth body is approximately rectangular in shape. The tooth tip 440 is formed on the tip side of the teeth 420. The tooth tip 440 is a portion that extends from the tip side of the tooth body in the circumferential and radial directions. The tooth tip 440 has recesses 443 at both ends of the front side of the back surface 444S of the tooth tip 440 facing the inner surface 450S. The gap between a pair of adjacent teeth 420 is a slot 460. A plurality of the slots 460 are formed in the stator core 400. In this embodiment, the number of slots 460 is 60.

The core projection 480 protrudes forward from the radially outer side of the stator core body 410. The core projection 480 is disposed on the front side of the stator core body 410 forming the slots 460.

### CONNECTING MEMBER 600

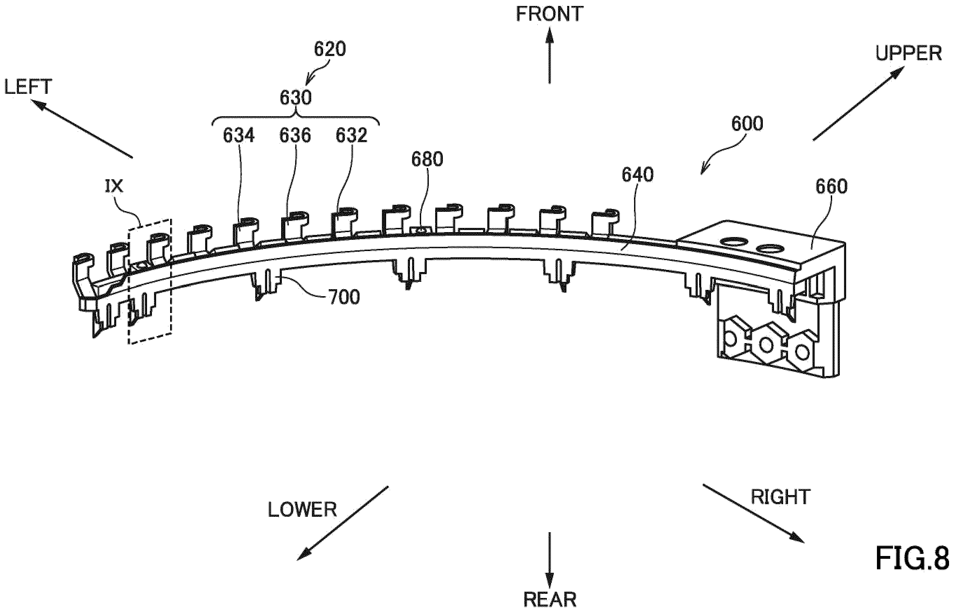

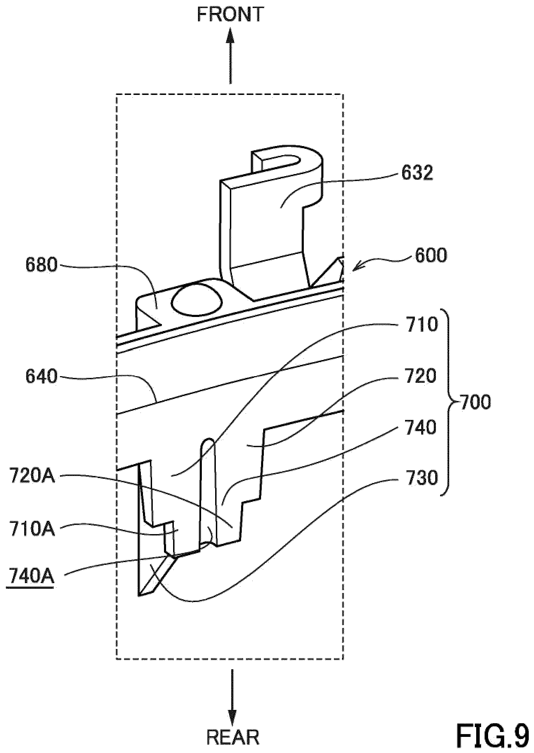

FIG. 8 is a perspective view illustrating a configuration of the connecting member 600. FIG. 9 is an enlarged view of the area indicated by IX in FIG. 8. As shown in FIG. 8, the connecting member 600 has an arc-shaped connecting member body 640, the terminal block 660 as described above, a connecting projection 700, and a busbar 620. The connecting projection 700 is an example of the first projection. As shown in FIG. 5, the connecting member 600 is an arc-shaped member along the radially inner circumference of the stator core 400. When one end of the connecting member 600 in the longitudinal direction (circumferential direction of the connecting member 600 of the rotation shaft) is defined as the first end 600A and the other end as the second end 600B, and the central axis of the stator core 400 is defined as the center C, the angle θ formed between the first imaginary line N1 connecting the end 600A and the center C and the second imaginary line N2 connecting the end 600B and the center C is 95.4°.

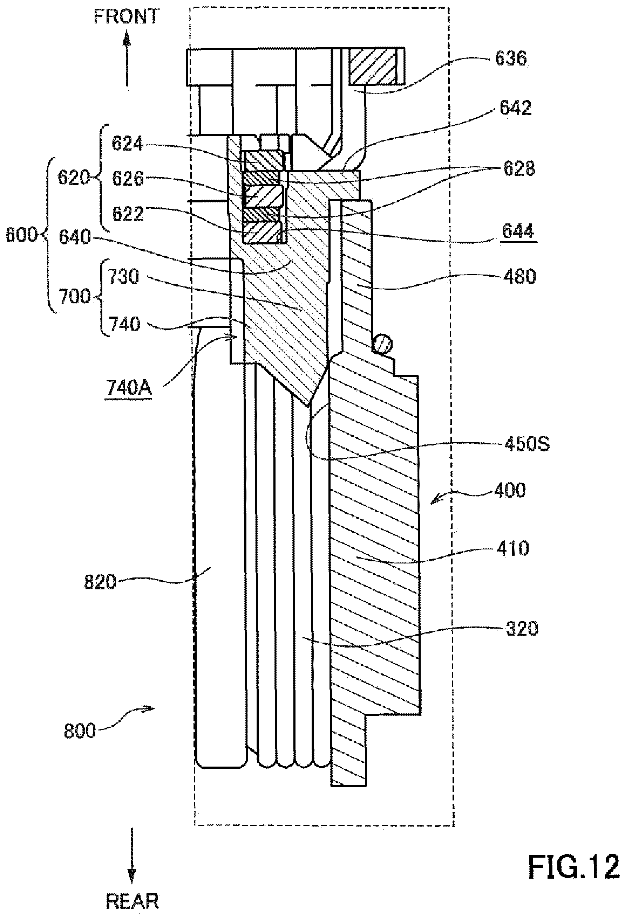

The connecting member body 640 is an arc-shaped member. The connecting member body 640 of the connecting member is made of resin. The connecting member body 640 has an outer projection 642 and a screw receptacle 680 (see FIG. 12). The connecting member body 640 has a groove 644 along the arc in the center of the front surface (see FIG. 12). The terminal block 660 is located at the end 600A, which is one directional side in the circumferential direction of the connecting member 600. The outer projection 642 protrudes radially outward from the front side of the radially outer surface of the connecting member body 640. The rear surface of the outer projection 642 contacts the front surface of the core projection 480 (see FIG. 12).

The screw receptacle 680 has a threaded hole in the axial direction. The stator core 400 and the connecting member 600 are screwed together via the screw hole in the screw receptacle 680. The radially outer surface of the connecting member body 640 faces the radially inner surface of the core projection 480 of the stator core 400 (see FIG. 12).

As shown in FIG. 9, the connecting projection 700 is a projection protruding rearward from the connecting member body 640. The connecting projection 700 is made of resin. The connecting projection 700 is a member inserted into the slot 460 of the stator core 400 to stabilize the positional relationship between the stator core 400 and the connecting member 600 (see FIG. 5). The connecting projection 700 is integrally molded with the connecting member body 640. The connecting projection 700 has a first inner portion 710, a second inner portion 720, an outer portion 730, and a connecting portion 740.

The connecting portion 740 is a portion of the connecting projection 700 that extends axially from the radially inner side of the connecting member body 640. The connecting portion 740 is U-shaped when viewed in the axial direction (see FIG. 11). The connecting portion 740 has a groove 740A, which is an open U-shaped portion along the axial direction, in the radially inner center.

The first inner portion 710 is a portion of the connecting projection 700 extending rearwardly from the radially inner surface of the connecting member body 640. The first inner portion 710 connects to one circumferential end of the connecting portion 740. The first inner portion 710 has a first protrusion 710A on the side of the connecting portion 740. The first protrusion 710A extends rearwardly from the tip of the first inner portion 710 and connects to one circumferential end of the connecting portion 740.

The second inner portion 720 is a portion of the connecting projection 700 extending rearwardly from the radially inner surface of the connecting member body 640. The second inner portion 720 connects to the other circumferential end of the connecting portion 740 that is not connected to the first inner portion 710. The second inner portion 720 has a second protrusion 720A on the side of the connecting portion 740. The second protrusion 720A extends rearwardly from the tip of the second inner portion 720 and connects to the circumferential other end of the connecting portion 740. The distance between the two ends of the first inner portion 710 and the second inner portion 720 is adjustable in the circumferential direction via the connecting portion 740.

The outer portion 730 is a portion of the connecting projection 700 that extends axially from the rear surface of the connecting member body 640. The outer portion 730 connects to the radially outer surface of the U-shaped center of the connecting portion 740. The axial length of the outer portion 730 gradually increases in the radial direction outwardly from the connecting portion 740. The distance between the outer portion 730 and the both ends of the first inner portion 710 or the second inner portion 720 is adjustable in the radial direction via the connecting portion 740.

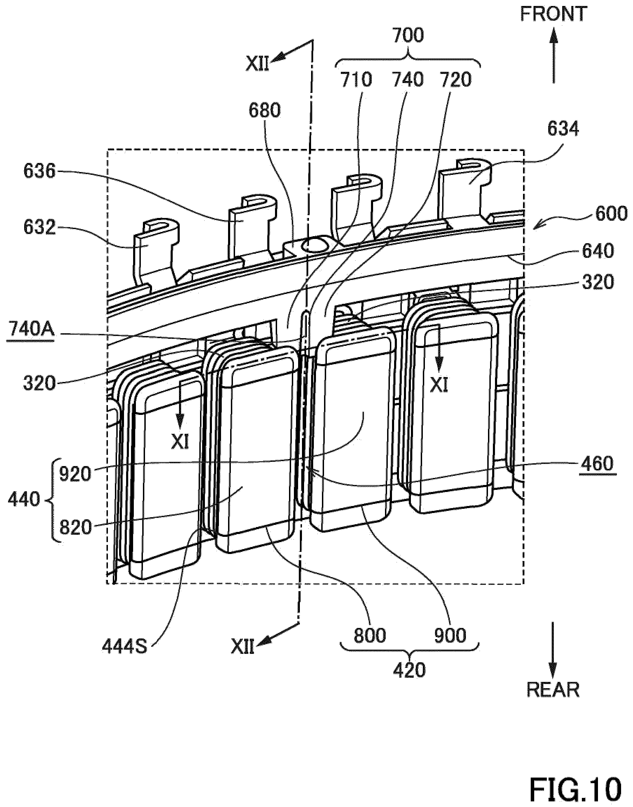

FIG. 10 is an enlarged view of X shown in FIG. 5. In other words, FIG. 10 is an enlarged view of the stator body 350. FIG. 11 is a cross-sectional view at position XI-XI in FIG. 10, i.e., a cross-sectional view of the stator body 350 cut in the radial direction above the teeth 420. FIG. 12 is an axial cross-sectional view at position XII-XII of FIG. 10, i.e., axially sectioned at the location of the slot 460 of the stator body 350.

As shown in FIGS. 10 and 11, the connecting projection 700 is inserted into the slot 460 between a pair of adjacent teeth 420 of the stator core 400 from the front side of the stator core 400. The first protrusion 710A of the first inner portion 710 and the second protrusion 720A of the second inner portion 720 contact the opposing pair of recesses 443 of the tooth tips 440 of the adjacent pair of teeth 420 of the stator core 400. The radially outer surface of the outer portion 730 contacts the inner surface 450S of the stator core body 410. In other words, the connecting projection 700 contacts the adjacent pair of teeth 420 in the circumferential direction. The connecting projection 700 contacts the teeth 420 in the radial direction. The connecting projection 700 contacts the stator core body 410 in the radial direction.

Specifically, as shown in FIGS. 10 and 11, one of any two teeth 420 adjacent to each other is defined as the first tooth 800 and the other as the second tooth 900. The respective tooth tips are defined as the first tooth tip 820 and the second tooth tip 920. The gap between the first tooth 800 and the second tooth 900 is the slot 460. The respective recesses 443 facing the first and second tooth tips 820 and 920 are defined as the first recess 830 and the second recess 930.

The connecting projection 700 is inserted into the slot 460 between the first tooth 800 and the second tooth 900. The first protrusion 710A of the first inner portion 710 of the connecting projection 700 contacts the first recess 830 of the first tooth 800. The second protrusion 720A of the second inner portion 720 of the connecting projection 700 contacts the second recess 930 of the second tooth 900. As a result, the connecting projection 700 contacts the first tooth tip 820 and the second tooth tip 920 in the circumferential direction. Since the connecting projection 700 is movable in the circumferential direction by the connecting portion 740, the connecting projection 700 more stably contacts the first tooth tip 820 and the second tooth tip 920.

The connecting projection 700 contacts the inner surface 450S of the stator core body 410 between the first tooth 800 and the second tooth 900 in the radial direction. The connecting projection 700 is thereby positioned between the tooth tips 440 of the first tooth tip 820 and the second tooth tip 920 and the inner surface 450S. Since the connecting projection 700 is movable in the radial direction by the connecting portion 740, the connecting projection 700 can more stably contact the tooth tips 440 of the first tooth tip 820 and the second tooth tip 920 as well as the inner surface 450S.

The busbar 620 is a member for electrically connecting each of the three-phase AC terminals of the terminal block 660 to the windings 320. The busbar 620 is an electrical conductor. The busbar 620 is formed of copper. As shown in FIG. 12, the busbar 620 is a plate-shaped member along the radial direction. The busbar 620 is arc-shaped along the circumferential direction of connecting member 600. The busbar 620 is composed of three pieces, i.e., a U-phase busbar 622, a V-phase busbar 624, and a W-phase busbar 626. The U-phase busbar 622, the V-phase busbar 624, and the W-phase busbar 626 are electrically connected to the U-phase terminal 662, the V-phase terminal 664, and the W-phase terminal 666 of the terminal block 660, respectively. Each busbar 620 is located in the groove 644 in the connecting member body 640. Specifically, the U-phase busbar 622, the V-phase busbar 624, and the W-phase busbar 626 are arranged overlapping each other in the groove 644 with an insulating resin 628 between them.

As shown in FIG. 8, the U-phase busbar 622 has four U-phase fusing terminals 632. Each U-phase fusing terminal 632 is positioned at predetermined intervals in the longitudinal direction of the U-phase busbar 622. The V-phase busbar 624 has V-phase fusing terminals 634, as does the U-phase busbar 622. The W-phase busbar 626 has W-phase fusing terminals 636, as does the U-phase busbar 622. The fusing terminal 630 is a member protruding forward from the arc-shaped plate of the busbar 620. The tip of the fusing terminal 630 is U-shaped in the circumferential direction of the busbar 620. The U-phase fusing terminals 632, the V-phase fusing terminals 634, and the W-phase fusing terminals 636 are arranged so that they do not overlap.

### WINDING 320

The windings 320 are connected to the three-phase AC circuit by delta wiring. A plurality of windings 320 are arranged on the stator body 350. In this embodiment, the number of windings 320 is six. As shown in FIG. 6, the windings 320 include UV windings 322, VW windings 324, and WU windings 326. The UV winding 322 electrically connects to the U-phase fusing terminal 632 and the V-phase fusing terminal 634. The VW winding 324 electrically connects to the V-phase fusing terminal 634 and the W-phase fusing terminal 636. The WU winding 326 electrically connects to the W-phase fusing terminal 636 and the U-phase fusing terminal 632. Two UV windings 322, two VW windings 324, and two WU windings 326 are disposed on the stator body 350, respectively. The same type of windings 320 (UV windings 322, VW windings 324, and WU windings 326) are arranged in two-parallel connections to the stator core 400.

The number of series connections of each winding 320 is 1/6 with respect to the number of slots 460. The number of series connections of each winding 320 is 5 times the number of parallel connections. In this embodiment, the windings 320 of the same type (UV winding 322, VW winding 324, and WU winding 326) are arranged in 10-series and 2-parallel connections to the stator core 400. Specifically, the two windings 320 of each type are wound on 20 teeth 420. The same type of windings 320 are wound on any pair of teeth 420 adjacent to each other. For example, as shown in FIG. 6, the UV windings 322 are wound on one pair of adjacent teeth 420. The VW windings 324 are wound on the adjacent pair of teeth 420 next to the teeth 420 on which the UV windings 322 are wound. The WU windings 326 are wound on the adjacent pair of teeth 420 next to the teeth 420 on which the VW windings 324 are wound. Of the windings 320 of the same type wound on any pair of teeth 420 adjacent to each other, one of the windings 320 is wound right-handed with respect to the teeth 420, whereas the other of the winding 320 is wound left-handed with respect to the teeth 420. As a result, each of the two parallel windings 320 of the same type wound on the pair of teeth 420 passes current in the same direction with respect to the rotation shaft, on the side of the slot 460.

### A-4. EFFECTS OF THIS EMBODIMENT:

Compared to conventional electric motors 134, this embodiment can improve manufacturing processes and reduce the material by improving the connecting member 600 with the busbar 620 that electrically connects the motor control circuit and the windings 320 arranged on the teeth 420 of the stator core 400. Specifically, conventional busbars 620 were arranged all around the stator core 400. In this embodiment, the length of the arc-shaped busbar 620 is about 1/4 of the total circumference of the stator core 400. This allows for a reduction in materials, including the busbar 620. This can reduce the number of fusing terminals 630 of the busbar 620, thereby reducing the number of times the fusing terminals 630 are formed (e.g., bent from the body of the busbar 620 body or formed into a U-shaped portion). The number of connections between the fusing terminals 630 and the windings 320 is also reduced. Furthermore, it is easier to process the busbar 620 if the busbar 620 is arc-shaped (part of a circumference) rather than a circular shape. By positioning the terminal block 660 at one end of the connecting member 600 with the busbar 620, the length of the connecting member 600 is minimized.

On the other hand, when the connecting member 600 with the arc-shaped busbar 620 is placed on the stator core 400, the positions of the connecting member 600 and the stator core 400 are misaligned. In this embodiment, the connecting projection 700 of the connecting member 600 contacts the stator core 400 in the circumferential and radial directions. As a result, the position of the stator core 400 and the connecting member 600 is stabilized with respect to the circumferential and radial directions of the stator core 400. In addition, the position of the stator core 400 and the connecting member 600 is further stabilized by the core projection 480 of the stator core 400 contacting the connecting member 600. In particular, when the stator body 350 is insert molded with resin, the stable position of the stator core 400 and the connecting member 600 prevents misalignment of the connecting member 600 and the stator core 400 when resin is injected into the mold.

This embodiment includes the rotor 200 having a rotation shaft, the stator core 400, the winding 320 wound around the stator core 400, the motor control circuit, and the connecting member 600 having the busbar 620 that is an electrical conductor electrically connecting the windings 320 and the motor control circuit, the connecting member 600 being arc-shaped along the circumferential direction of the rotation shaft. The angle θ between the first imaginary line N1 connecting the rotation shaft and one end 600A of the connecting member 600 and the second imaginary line N2 connecting the rotation shaft and the other end 600B of the connecting member 600 is 180 degrees or less. According to the electric propulsion device 100, the length of the connecting member 600 is less than 1/2 the circumference of the stator core 400, which reduces the amount of material and facilitates the processing of the connecting member 600.

In this embodiment, the connecting member 600 may include a terminal block 660, and the terminal block 660 may be located on one directional side relative to the circumferential center of the connecting member 600. According to this configuration, the terminal block 660 of the connecting member 600 is located on one directional side in the circumferential direction of the connecting member 600, which facilitates the processing of the connecting member 600.

In this embodiment, the stator core 400 may be provided with 12 or more slots 460 formed therein. According to this configuration, even if the number of slots 460 is large, the manufacturing process can be simplified by such a connecting member 600.

In this embodiment, the number of series connections of the windings 320 relative to the number of slots 460 may be 1/12 or more. According to this configuration, the terminals of the slot 460 can be easily grouped by such a connecting member 600.

In this embodiment, the ratio of the number of series connections of the windings 320 to the number of parallel connections of the windings 320 may be greater than 1. According to this configuration, with the above connecting member 600, the windings 320 arranged on the stator core 400 have more series connections than parallel connections, thus increasing the torque of the electric motor 134.

In this embodiment, the connecting member 600 may have the connecting projection 700 to be inserted between the adjacent first tooth 800 and second tooth 900 disposed on the stator core 400. According to this configuration, the connecting member 600 is stabilized against the stator core 400 by having the connecting projection 700.

In this embodiment, the connecting projection 700 of the connecting member 600 may contact both the first tooth 800 and the second tooth 900 in the circumferential direction. According to this configuration, the connecting member 600 is more stable with respect to the stator core 400 in the circumferential direction of the rotation shaft by having the connecting projections 700 contacting two adjacent teeth in the circumferential direction of the rotation shaft.

In this embodiment, the connecting projections 700 of the connecting member 600 may contact at least one of the first tooth 800 and the second tooth 900 in the radial direction of the rotation shaft. According to this configuration, the connecting member 600 is more stable with respect to the stator core 400 in the radial direction of the rotation shaft by having the connecting projections 700 contacting at least one of the two adjacent teeth in the radial direction of the rotation shaft.

In this configuration, the connecting projection 700 may have grooves 740A in the axial direction of the rotation shaft. According to this configuration, the connecting member 600 and the stator core 400 can be more stabilized in the circumferential direction by the connecting projection 700 of the connecting member 600 having the groove 740A in the axial direction of the rotation shaft.

In this embodiment, the stator core 400 may have the core projection 480 in the radial direction of the rotation shaft, and the core projection 480 may contact one side of the connecting member 600 in the radial direction. According to this configuration, the core projection 480 stabilize the connecting member 600 with respect to the radial direction.

In this configuration, the stator 300 including the stator core 400, the winding 320, and the connecting member 600 may be embedded in a resin. According to this configuration, when the stator core 400 portion is embedded in resin, deformation of the connecting member 600 is less likely to occur by the structure of the connecting member 600 described above.

### B. MODIFICATIONS:

The technology disclosed herein is explained in combination with the embodiments described above.

In the above embodiment, the resin portion 310 of the stator 300 was the entire of the front side and the radially inner side of the stator 300 and the outer front half. Alternatively, the front side of the stator 300 may be the resin portion 310.

In the above embodiment, the power source for the electric motor 134 was three-phase AC. Alternatively, the power source may be two-phase AC or multiphase AC.

In the above embodiment, there were 60 teeth 420. Alternatively, the number of the teeth 420 is sufficient to be 12 or more. The back surface 444S of the teeth 420 was formed with the recess 443. Alternatively, the recess 443 may not be formed. In that case, it is sufficient if the connecting projection 700 is arranged on the pair of circumferentially opposite sides of the adjacent pair of teeth 420 in the circumferential direction. It is also sufficient if the connecting projection 700 is arranged on the back surface 444S of the tooth tip 440 of at least one of the adjacent pairs of teeth 420 and on the inner surface 450S of the radially inner side of the stator core body 410 in the radial direction. For example, the circumferential surface of the first inner portion 710 of the connecting projection 700 may contact the circumferential surface of the first tooth 800, and the circumferential surface of the second inner portion 720 may contact the circumferential surface of the second tooth 900. The portions of the first inner portion 710 and the second inner portion 720 that contact the teeth 420 may be recessed.

The following variants of the connecting projection 700 described in this paragraph, in which the connecting projection 700 does not contact the first and second tooth tips and/or does not have the connecting portion 740 and/or the outer portion 730, are not according to the invention and are presented for illustration purposes only.

In the above embodiment, the connecting projection 700 contacts the first tooth tip 820 and the second tooth tip 920 in the circumferential direction but may not contact them. As long as the positional relationship between the stator core 400 and the connecting member 600 is maintained, the connecting projections 700 need only be arranged circumferentially between the first tooth tip 820 and the second tooth tip 920. Specifically, it is sufficient if misalignment between the connecting member 600 and the stator core 400 can be prevented when the stator body 350 is insert molded with resin. In the above embodiment, the connecting projection 700 has the first inner portion 710, the second inner portion 720, the outer portion 730, and the connecting portion 740. Alternatively, the connecting projection 700 may have only the first inner portion 710 and the second inner portion 720. The structure may also have no connecting portion 740. There may also be a plurality of outer portions 730.

In the above embodiment, the surface of the teeth 420 is not particularly processed. Alternatively, the surface of the teeth may be processed as needed. For example, an insulator (such as a bobbin) may be provided on all or part of the surface of the teeth 420 including the tooth tips 440 and/or the inner surface 450S of the stator core body 410. The recess 443 in the teeth 420 may be formed as an insulator. In that case, the connecting projections 700 may contact the recess 443 of the insulator or the inner surface 450S of the insulator. The material of the insulator may be resin. The surface of the teeth 420 may be provided with grooves to receive the windings 320. The insulator may be molded from resin and then placed on the teeth 420. The insulator may deform like warping due to molding shrinkage. This deformation results in a dimensional error in the distance between a pair of opposing recesses 443. The connecting projections 700 are precisely aligned circumferentially with any adjacent pair of teeth 420 by the grooves 740A of the connecting projections 700, even if there is a dimensional error in the insulator.

The core projection 480 may be made of resin. The core projection 480 may be integrally molded with resin together with the insulators of the teeth 420.

In the above embodiment, the angle θ formed by the first imaginary line N1 connecting the center C and the end 600A of the connecting member 600 and the second imaginary line N2 connecting the center C and the end 600B was about 90 degrees. Alternatively, the angle θ may be more than 90 degrees. The angle θ formed by the first imaginary line N1 and the second imaginary line N2 may be 180 degrees or less, or 240 degrees or less.

In the above embodiment, the terminal block 660 was located at one end of the connecting member 600. Alternatively, the terminal block may be located at either end in the circumferential direction.

In the above embodiment, the windings 320 were electrically connected to the three-phase terminals of the terminal block 660 with delta wiring. Alternatively, star wiring is also acceptable. The number of windings 320 was six. Alternatively, it is sufficient if the number of series connections relative to the number of slots 460 is 1/12 or more. The number of series connections of the windings 320 was five times the number of parallel connections. Alternatively, it can be any number of times as long as it is at least one times the number of parallel connections. In the above embodiment, the windings 320 were arranged in 10-series and 2-parallel connections. Alternatively, the numbers of series and parallel connections are freely selectable as long as the number of series connections of the windings 320 is more than 1 times the number of parallel connections. In the above embodiment, the same type of windings 320 are wound on one pair of teeth 420 adjacent to each other. Alternatively, the same type of windings 320 can be wound on a group of three teeth 420.

In the above embodiment, the positional relationship between the rotor 200 and the stator 300 of the electric motor 134 is that the stator 300 is outside with respect to the rotor 200. Alternatively, this relationship can be reversed. In that case, the teeth 420 of the stator core 400 are positioned outside of the stator core 400.

## Claims

1. An electric boat propulsion device (100), comprising:
a rotor (200) having a rotation shaft, the rotor (200) is configured in radial direction of the rotation shaft;
a stator core (400);
windings (320) wound around the stator core (400);
a motor control circuit; and
a connecting member (600) having a conductor (620) electrically connecting the windings (320) and the motor control circuit, the connecting member (600) being arc-shaped along a circumferential direction of the rotation shaft, wherein
an angle (θ) between a first imaginary line (N1) connecting the rotation shaft and a first end (600A) of the connecting member (600) and a second imaginary line (N2) connecting the rotation shaft and a second end (600B) of the connecting member (600) and subtended by the connecting member (600) itself, is 240 degrees or less, wherein the connecting member (600) has at least one first projection (700) and the stator core (400) has at least one first tooth (800) and second tooth (900) adjacent to each other, wherein the first projection (700) is inserted between the first tooth (800) and the second tooth (900) disposed on the stator core (400), the first projection (700) of the connecting member (600) is positioned between the first tooth (800) and second tooth (900) in the circumferential direction, and the first projection (700) of the connecting member (600) is located between the first tooth (800) and the second tooth (900) and an inner surface (450S) of the stator core (400) between a base end of the first tooth (800) and a base end of the second tooth (900) in the radial direction of the rotation shaft, wherein the first projection (700) has:
a first inner portion (710) contacting the first tooth (800),
a second inner portion (720) contacting the second tooth (900),
a connecting portion (740) located between the first inner portion (710) and the second inner portion (720) in the circumferential direction and connecting the first inner portion (710) and the second inner portion (720), the connecting portion (740) having a U-shape protruding toward the inner surface (450S) side when viewed in the axial direction, and
an outer portion (730) connected to the U-shaped portion of the connecting portion (740) and contacting the inner surface (450S).

2. The electric boat propulsion device (100) according to claim 1, wherein the angle (θ) is 180 degrees or less.

3. The electric boat propulsion device (100) according to claim 1 or claim 2, wherein the connecting member (600) includes a terminal block (660), and the terminal block (660) is located on one directional side relative to a circumferential center of the connecting member (600).

4. The electric boat propulsion device (100) according to any one of claims 1 to 3,
wherein the stator core (400) is provided with 12 or more slots (460) formed therein.

5. The electric boat propulsion device (100) according to any one of claims 1 to 4, with a number of series connections of the windings (320) and a number of parallel connections of the windings (320).

6. The electric boat propulsion device according to claim 4 and 5, wherein the number of series connections of the windings relative to a number of slots is 1/12 or more.

7. The electric boat propulsion device (100) according to claim 5, wherein a ratio of the number of series connections of the windings (320) to the number of parallel connections of the windings (320) is greater than 1.

8. The electric boat propulsion device (100) according to any one of claims 1 to 7,
wherein the conductor is a busbar (620).

9. The electric boat propulsion device (100) according to any one of claims 1 to 8,
wherein the first projection (700) has a groove (740A) along an axial direction of the rotation shaft.

10. The electric boat propulsion device (100) according to any one of claims 1 to 9,
wherein the stator core (400) has at least one second projection (480) in the radial direction of the rotation shaft, and the second projection (480) contacts the connecting member (600) in the radial direction of the rotation shaft.

11. The electric boat propulsion device (100) according to any one of claims 1 to 10, wherein a stator (300) comprising the stator core (400), the windings (320), and the connecting member (600) is embedded in a resin.

12. A boat comprising a boat body (10) and an electric boat propulsion device (100) according to any one of claims 1 to 11, which is mounted on the boat body (10).

## Patentansprüche

1. Elektrische Schiffsantriebsvorrichtung (100), umfassend:
einen Rotor (200), der eine Drehwelle aufweist, wobei der Rotor (200) in Radialrichtung der Drehwelle konfiguriert ist;
einen Statorkern (400);
Wicklungen (320), die um den Statorkern (400) gewickelt sind;
eine Motorsteuerschaltung; und
ein Verbindungselement (600), das einen Leiter (620) aufweist, der die Wicklungen (320) und die Motorsteuerschaltung elektrisch verbindet, wobei das Verbindungselement (600) entlang einer Umfangsrichtung der Drehwelle bogenförmig ist, wobei
ein Winkel (θ) zwischen einer ersten gedachten Linie (N1), die die Drehwelle und ein erstes Ende (600A) des Verbindungselements (600) verbindet, und einer zweiten gedachten Linie (N2), die die Drehwelle und ein zweites Ende (600B) des Verbindungselements (600) verbindet, und der von dem Verbindungselement (600) selbst aufgespannt wird, 240 Grad oder weniger beträgt, wobei das Verbindungselement (600) wenigstens einen ersten Vorsprung (700) aufweist und der Statorkern (400) wenigstens einen ersten Zahn (800) und einen zweiten Zahn (900) aufweist, die einander benachbart sind, wobei der erste Vorsprung (700) zwischen dem ersten Zahn (800) und dem zweiten Zahn (900), die an dem Statorkern (400) angeordnet sind, eingesetzt ist, wobei der erste Vorsprung (700) des Verbindungselements (600) in Umfangsrichtung zwischen dem ersten Zahn (800) und dem zweiten Zahn (900) angeordnet ist und der erste Vorsprung (700) des Verbindungselements (600) in Radialrichtung der Drehwelle zwischen dem ersten Zahn (800) und dem zweiten Zahn (900) und einer Innenfläche (450S) des Statorkerns (400) zwischen einem Zahnfuß des ersten Zahns (800) und einem Zahnfuß des zweiten Zahns (900) angeordnet ist, wobei der erste Vorsprung (700) aufweist:
einen ersten inneren Abschnitt (710), der mit dem ersten Zahn (800) in Kontakt steht,
einen zweiten inneren Abschnitt (720), der mit dem zweiten Zahn (900) in Kontakt steht,
einen Verbindungsabschnitt (740), der in Umfangsrichtung zwischen dem ersten inneren Abschnitt (710) und dem zweiten inneren Abschnitt (720) angeordnet ist und den ersten inneren Abschnitt (710) und den zweiten inneren Abschnitt (720) verbindet, wobei der Verbindungsabschnitt (740) bei Betrachtung in Axialrichtung eine U-Form aufweist, die zur Seite der Innenfläche (450S) hin vorspringt, und
einen äußeren Abschnitt (730), der mit dem U-förmigen Abschnitt des Verbindungsabschnitts (740) verbunden ist und mit der Innenfläche (450S) in Kontakt steht.

2. Elektrische Schiffsantriebsvorrichtung (100) gemäß Anspruch 1, wobei der Winkel (θ) 180 Grad oder weniger beträgt.

3. Elektrische Schiffsantriebsvorrichtung (100) gemäß Anspruch 1 oder Anspruch 2, wobei das Verbindungselement (600) einen Klemmenblock (660) umfasst und der Klemmenblock (660) in Umfangsrichtung auf einer Seite der Umfangsmitte des Verbindungselements (600) angeordnet ist.

4. Elektrische Schiffsantriebsvorrichtung (100) gemäß einem der Ansprüche 1 bis 3, wobei der Statorkern (400) mit 12 oder mehr darin ausgebildeten Nuten (460) versehen ist.

5. Elektrische Schiffsantriebsvorrichtung (100) gemäß einem der Ansprüche 1 bis 4, mit einer Anzahl von Reihenschaltungen der Wicklungen (320) und einer Anzahl von Parallelschaltungen der Wicklungen (320).

6. Elektrische Schiffsantriebsvorrichtung gemäß Anspruch 4 und 5, wobei die Anzahl der Reihenschaltungen der Wicklungen bezogen auf eine Anzahl von Nuten 1/12 oder mehr beträgt.

7. Elektrische Schiffsantriebsvorrichtung (100) gemäß Anspruch 5, wobei ein Verhältnis der Anzahl der Reihenschaltungen der Wicklungen (320) zur Anzahl der Parallelschaltungen der Wicklungen (320) größer als 1 ist.

8. Elektrische Schiffsantriebsvorrichtung (100) gemäß einem der Ansprüche 1 bis 7, wobei der Leiter eine Sammelschiene (620) ist.

9. Elektrische Schiffsantriebsvorrichtung (100) gemäß einem der Ansprüche 1 bis 8, wobei der erste Vorsprung (700) eine Rille (740A) entlang einer Axialrichtung der Drehwelle aufweist.

10. Elektrische Schiffsantriebsvorrichtung (100) gemäß einem der Ansprüche 1 bis 9, wobei der Statorkern (400) wenigstens einen zweiten Vorsprung (480) in Radialrichtung der Drehwelle aufweist und der zweite Vorsprung (480) das Verbindungselement (600) in Radialrichtung der Drehwelle kontaktiert.

11. Elektrische Schiffsantriebsvorrichtung (100) gemäß einem der Ansprüche 1 bis 10, wobei ein Stator (300), der den Statorkern (400), die Wicklungen (320) und das Verbindungselement (600) umfasst, in ein Harz eingebettet ist.

12. Boot, umfassend einen Bootskörper (10) und eine elektrische Schiffsantriebsvorrichtung (100) gemäß einem der Ansprüche 1 bis 11, die an dem Bootskörper (10) montiert ist.

## Revendications

1. Dispositif de propulsion de bateau électrique (100), comprenant :
un rotor (200) présentant un arbre de rotation, le rotor (200) étant configuré dans la direction radiale de l'arbre de rotation ;
un noyau de stator (400) ;
des enroulements (320) enroulés autour du noyau de stator (400) ;
un circuit de commande du moteur ; et
un élément de connexion (600) comportant un conducteur (620) reliant électriquement les enroulements (320) et le circuit de commande du moteur, l'élément de connexion (600) étant en forme d'arc suivant une direction circonférentielle de l'arbre de rotation, dans lequel
un angle (θ) entre une première ligne imaginaire (N1) reliant l'arbre de rotation et une première extrémité (600A) de l'élément de connexion (600) et une deuxième ligne imaginaire (N2) reliant l'arbre de rotation et une deuxième extrémité (600B) de l'élément de connexion (600), et sous-tendu par l'élément de connexion (600) lui-même, est de 240 degrés ou moins, dans lequel l'élément de connexion (600) comporte au moins une première saillie (700) et le noyau de stator (400) comporte au moins une première dent (800) et une deuxième dent (900) adjacentes l'une à l'autre, dans lequel la première saillie (700) est insérée entre la première dent (800) et la deuxième dent (900) disposées sur le noyau de stator (400), la première saillie (700) de l'élément de connexion (600) est positionnée entre la première dent (800) et la deuxième dent (900) dans la direction circonférentielle, et la première saillie (700) de l'élément de connexion (600) est située entre la première dent (800) et la deuxième dent (900) et une surface intérieure (450S) du noyau de stator (400) entre un pied de la première dent (800) et un pied de la deuxième dent (900) dans la direction radiale de l'arbre de rotation, dans lequel la première saillie (700) comporte :
une première partie intérieure (710) en contact avec la première dent (800),
une deuxième partie intérieure (720) en contact avec la deuxième dent (900),
une partie de liaison (740) située entre la première partie intérieure (710) et la deuxième partie intérieure (720) dans la direction circonférentielle et reliant la première partie intérieure (710) et la deuxième partie intérieure (720), la partie de liaison (740) présentant une forme en U faisant saillie vers le côté de la surface intérieure (450S) lorsqu'elle est vue dans la direction axiale, et
une partie extérieure (730) reliée à la partie en forme de U de la partie de liaison (740) et en contact avec la surface intérieure (450S).

2. Dispositif de propulsion de bateau électrique (100) selon la revendication 1, dans lequel l'angle (θ) est de 180 degrés ou moins.

3. Dispositif de propulsion de bateau électrique (100) selon la revendication 1 ou la revendication 2, dans lequel l'élément de connexion (600) comprend un bornier (660), et le bornier (660) est situé d'un côté, dans la direction circonférentielle, par rapport à un centre circonférentiel de l'élément de connexion (600).

4. Dispositif de propulsion de bateau électrique (100) selon l'une quelconque des revendications 1 à 3, dans lequel le noyau de stator (400) est pourvu de 12 encoches (460) ou plus formées dans celui-ci.

5. Dispositif de propulsion de bateau électrique (100) selon l'une quelconque des revendications 1 à 4, avec un nombre de connexions en série des enroulements (320) et un nombre de connexions en parallèle des enroulements (320).

6. Dispositif de propulsion de bateau électrique selon les revendications 4 et 5, dans lequel le nombre de connexions en série des enroulements par rapport à un nombre d'encoches est de 1/12 ou plus.

7. Dispositif de propulsion de bateau électrique (100) selon la revendication 5, dans lequel un rapport du nombre de connexions en série des enroulements (320) au nombre de connexions en parallèle des enroulements (320) est supérieur à 1.

8. Dispositif de propulsion de bateau électrique (100) selon l'une quelconque des revendications 1 à 7, dans lequel le conducteur est une barre omnibus (620).

9. Dispositif de propulsion de bateau électrique (100) selon l'une quelconque des revendications 1 à 8, dans lequel la première saillie (700) comporte une rainure (740A) suivant une direction axiale de l'arbre de rotation.

10. Dispositif de propulsion de bateau électrique (100) selon l'une quelconque des revendications 1 à 9, dans lequel le noyau de stator (400) comporte au moins une deuxième saillie (480) dans la direction radiale de l'arbre de rotation, et la deuxième saillie (480) est en contact avec l'élément de connexion (600) dans la direction radiale de l'arbre de rotation.

11. Dispositif de propulsion de bateau électrique (100) selon l'une quelconque des revendications 1 à 10, dans lequel un stator (300) comprenant le noyau de stator (400), les enroulements (320) et l'élément de connexion (600) est noyé dans une résine.

12. Bateau comprenant un corps de bateau (10) et un dispositif de propulsion de bateau électrique (100) selon l'une quelconque des revendications 1 à 11, lequel est monté sur le corps de bateau (10).
